# EUROPEAN PATENT APPLICATION

(11) **EP 4 579 487 A1**
(43) Date of publication of application: **02.07.2025**
(21) Application number: 24211853.7
(22) Date of filing: 08.11.2024
(51) Int. Cl.: G06F 16/9032

(54) **METHOD AND APPARATUS FOR DIALOGUE**

(30) Priority: 25.07.2024 CN 202411008352
(71) Applicant: Beijing Baidu Netcom Science Technology Co., Ltd., Beijing 100085 (CN)
(72) Inventor: Zhang, Jinghan, Beijing, 100085 (CN)
(74) Representative: Richly & Ritschel Patentanwälte PartG mbB

(57) **Abstract**

The present disclosure provides a method and apparatus for dialogue, relates to the field of artificial intelligence technology, in particular to the field of natural language processing and deep learning technology, and can be used in application scenarios such as generative search, intelligent editing of documents, intelligent assistants, virtual assistants, or intelligent e-commerce. A specific embodiment of the method includes: determining an application scenario corresponding to user query information; acquiring user data in the application scenario; invoking a tool in the application scenario, to process the user query information and the user data to obtain a tool execution result; and generating, based on the tool execution result, answer information corresponding to the user query information.

## Description

### TECHNICAL FIELD

The present disclosure relates to the field of artificial intelligence technology, in particular to the field of natural language processing and deep learning technology.

### BACKGROUND

Task-Oriented Dialogue Systems (TODS) are designed to complete specific user tasks, such as booking tickets, or playing music, through multiple rounds of dialogue. Typically, a modular architecture is used, including four main modules: Natural Language Understanding (NLU), Dialogue State Tracking (DST), Dialogue Policy Learning (DPL) and Natural Language Generation (NLG).

Natural Language Understanding: the NLU module is responsible for converting a user's natural language input into a semantic representation that can be understood by the system, which typically involves subtasks such as field classification, intent recognition and slot filling.

Dialogue State Tracking: The DST module is the core of dialogue management, tracks and updates a dialogue state by analyzing a dialogue history and a current user question.

Dialogue Policy Learning: the DPL module decides a next-step dialogue action based on the current dialogue state and a predefined policy model. Policy learning usually uses a supervised learning method or a reinforcement learning method.

Natural Language Generation: the NLG module is responsible for converting a response into natural language form. Typically, the response is generated through end-to-end generation.

### SUMMARY

Embodiments of the present disclosure propose a method and apparatus for dialogue, a device, a storage medium, and a program product.

In a first aspect, an embodiment of the present disclosure proposes a method for dialogue, including: determining an application scenario corresponding to user query information; acquiring user data in the application scenario; invoking a tool in the application scenario, to process the user query information and the user data to obtain a tool execution result; and generating, based on the tool execution result, answer information corresponding to the user query information.

In a second aspect, an embodiment of the present disclosure proposes a method for training a tool large language model, including: acquiring a training sample corresponding to at least one application scenario, where the training sample includes first sample user historical dialogue information and a first sample tool tag; inputting the first sample user historical dialogue information into a large language model to obtain first prediction tool information; calculating a first loss, based on the first prediction tool information and the first sample tool tag; and adjusting parameters of the large language model based on the first loss, to obtain the tool large language model.

In a third aspect, an embodiment of the present disclosure provide an apparatus for dialogue, including: a determination module, configured to determine an application scenario corresponding to user query information; an acquisition module, configured to acquire user data in the application scenario; an invoking module, configured to invoke a tool in the application scenario, to process the user query information and the user data to obtain a tool execution result; and a first generation module, configured to generate, based on the tool execution result, answer information corresponding to the user query information.

In a fourth aspect, an embodiment of the present disclosure provide an apparatus for dialogue, including: a first acquisition module, configured to acquire a training sample corresponding to at least one application scenario, wherein the training sample comprises first sample user historical dialogue information and a first sample tool tag; a first prediction module, configured to input the first sample user historical dialogue information into a large language model to obtain first prediction tool information; a first calculation module, configured to calculate a first loss, based on the first prediction tool information and the first sample tool tag; and a first adjusting module, configured to adjust parameters of the large language model based on the first loss, to obtain the tool large language model.

In a fifth aspect, an embodiment of the present disclosure provide an electronic device, comprising: one or more processors; and a memory, storing one or more programs, wherein the one or more programs, when executed by the one or more processors, cause the one or more processors to implement the method described by the first aspect or the second aspect.

In a sixth aspect, embodiments of the present disclosure provide a computer-readable medium, storing a computer program thereon, wherein the program, when executed by a processor, causes the processor to implement the method described by the first aspect or the second aspect.

In a seventh aspect, an embodiment of the present disclosure provides a computer program product, comprising a computer program, wherein the computer program, when executed by a processor, implements the method described by the first aspect or the second aspect.

Embodiments of the present disclosure provide a method for dialogue. By using a tool in an application scenario, the method is able to deeply understand and accurately satisfy user needs, achieving a targeted answer to the user's query in the application scenario, satisfying the user's personalized and diversified needs, and effectively stimulating the user's interest in purchasing.

It should be understood that contents described in this section are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

Other features, objectives and advantages of the present disclosure will become more apparent by reading the detailed description of non-limiting embodiments with reference to the following accompanying drawings. The accompanying drawings are used for a better understanding of the present solution, and do not constitute a limitation of the present disclosure. In which:
FIG. 1 is a flowchart of an embodiment of a method for training a tool large language model according to the present disclosure;
FIG. 2 is a flowchart of supervised fine-tuning of a large language model;
FIG. 3 is a flowchart of an embodiment of a method for dialogue according to the present disclosure;
FIG. 4 is a flowchart of another embodiment of the method for dialogue according to the present disclosure;
FIG. 5 is a model structure diagram of the method for dialogue;
FIG. 6 is a flowchart of single-intelligent agent interaction;
FIG. 7 is a flowchart of multi-intelligent agent interaction;
FIG. 8 is a diagram of a multi-intelligent agent memory update mechanism;
FIG. 9 is a schematic structural diagram of an embodiment of an apparatus for training a tool large language model according to the present disclosure;
FIG. 10 is a schematic structural diagram of an embodiment of an apparatus for dialogue according to the present disclosure; and
FIG. 11 is a block diagram of an electronic device used to implement the method for dialogue according to embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

It is noted that the embodiments in the present disclosure and the features in the embodiments may be combined with each other without conflict. The present disclosure will now be described in detail with reference to the accompanying drawings and examples.

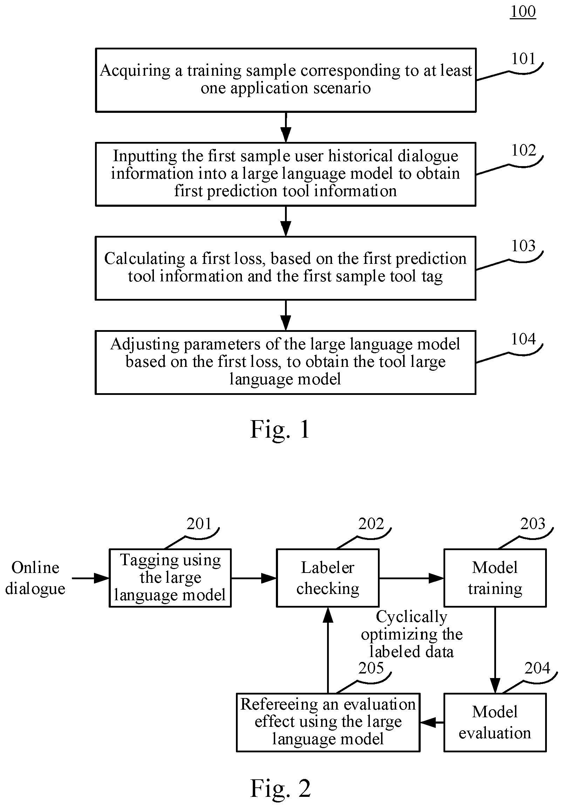

FIG. 1 illustrates a flow 100 of an embodiment of a method for training a tool large language model according to the present disclosure. The method for training a tool large language model includes the following steps:
Step 101, acquiring a training sample corresponding to at least one application scenario.

In the present embodiment, an executing body of the method for training a tool large language model may acquire the training sample corresponding to the at least one application scenario.

The executing body of the method for training a tool large language model is usually a server. The server may be hardware or software. When the server is hardware, it may be implemented as a distributed server cluster composed of a plurality of servers, or as a single server. When the server is software, it may be implemented as a plurality of software or software modules (e.g., for providing distributed services), or as a single software or software module, which is not limited herein.

Typically, collecting a large number of historical dialogue information of a user in various application scenarios can obtain training samples corresponding to the various application scenarios through processing. The application scenarios may be scenarios in which the user is engaged in a dialogue. The application scenarios may include, but are not limited to: sales scenarios, question-and-answer scenarios, or the like. Different application scenarios may provide different tools for processing the historical dialogue information. For example, in a sales scenario, tools may include but are not limited to goods recommendation, goods comparison, or user behaviour analysis. In a question-and-answer scenario, tools may include but are not limited to question answering, or user satisfaction evaluation. The training sample may include first sample user historical dialogue information and a first sample tool tag. The first sample user historical dialogue information may be historical dialogue information of a first sample user. The first sample tool tag may be a tool tag obtained by tool tagging the first sample user historical dialogue information according to the application scenario. For example, the first sample tool tag may be obtained by inputting the first sample user historical dialogue information into the large language model. As another example, the first sample tool tag may be obtained by manually tagging the first sample user historical dialogue information by those skilled in the art.

In some embodiments, according to different application scenarios, pluggable tools and corresponding description files may be provided. Setup of such pluggable tools is highly flexible and scalable, and can be adapted to a variety of different application scenarios. The description files of the tools may usually contain names, functions, basic parameters, optional parameters, etc., of the tools. In addition, some usage examples may also be contained. Such description files can contribute to better planning, tool selection, tool parameter generation, and tool execution, etc.

Step 102, inputting the first sample user historical dialogue information into a large language model to obtain first prediction tool information.

In the present embodiment, the executing body may input the first sample user historical dialogue information into the large language model to obtain the first prediction tool information.

The large language model may be a trained model having generic tool tagging capability. The large language model cannot distinguish the application scenario of the first sample user historical dialogue information, may perform generic tool tagging on the first sample user historical dialogue information to obtain the first prediction tool information.

Step 103, calculating a first loss, based on the first prediction tool information and the first sample tool tag.

In the present embodiment, the executing body may calculate the first loss, based on the first prediction tool information and the first sample tool tag.

Here, a suitable loss function may be selected. By inputting the first prediction tool information and the first sample tool tag into the loss function, the first loss may be obtained from calculation. The first loss may be used to represent a difference between the first prediction tool information and the first sample tool tag, indicating that the smaller the difference, the stronger the tool tagging capability of the large language model for different application scenarios; the larger the difference, the weaker the tool tagging capability of the large language model for different application scenarios.

Step 104, adjusting parameters of the large language model based on the first loss, to obtain the tool large language model.

In the present embodiment, the executing body may adjust the parameters of the large language model based on the first loss, to obtain the tool large language model.

The parameters of the large language model may be continuously and iteratively updated during the training until the loss is small enough and the model converges, i.e., may obtain the tool large language model. The tool large language model may have the tool tagging capability for different application scenarios.

In some embodiments, in order to ensure the accuracy and reliability of tool tagging of the tool large language model for different application scenarios, the tool large language model may be tested, adjusted and optimized. Specific steps are as follows:

First, acquiring a test sample corresponding to at least one application scenario.

Typically, collecting a large number of historical dialogue information of a user in various application scenarios can obtain test samples corresponding to the various application scenarios through processing. Here, the test sample may include second sample user historical dialogue information and a second sample tool tag. The second sample user historical dialogue information may be historical dialogue information of a second sample user. The second sample tool tag may be a tool tag obtained by tool tagging the second sample user historical dialogue information according to the application scenario.

Next, inputting the second sample user historical dialogue information into the tool large language model to obtain second prediction tool information.

Then, calculating an accuracy of the tool large language model, based on the second sample tool tag and the second prediction tool information.

Typically, if a difference between the second sample tool tag and the second prediction tool information is small, it may be considered that tool tagging of the tool large language model is accurate. If the difference between the second sample tool tag and the second prediction tool information is large, it may be considered that tool tagging of the tool large language model is inaccurate. Here, the accuracy of the tool large language model may be obtained by dividing the number of times of accurate tagging of the tool large language model by a total number of times of tool tagging of the tool large language model.

Finally, determining whether the accuracy of the tool large language model is less than a preset accuracy threshold. If the accuracy is not less than the preset accuracy threshold, it may be determined that the tool large language model passes a test. If the accuracy is less than the preset accuracy threshold, a second loss may be calculated based on the second sample tool tag and the second prediction tool information, and parameters of the tool large language model may be adjusted based on the second loss.

An embodiment of the present disclosure provides a method for training a tool large language model, using training samples corresponding to various application scenarios to perform supervised fine-tuning on the large language model, to obtain the tool large language model, which improves the tool tagging capability of the tool large language model for various application scenarios.

FIG. 2 illustrates a flowchart of supervised fine-tuning of a large language model.

Step 201, tagging online dialogue using the large language model to obtain labeled data.

Step 202, a labeler checking the labeled data.

Step 203, performing model training on the large language model using the checked labeled data.

Step 204, performing model evaluation on the trained large language model.

Step 205, refereeing an evaluation effect using the large language model, and cyclically optimizing the labeled data.

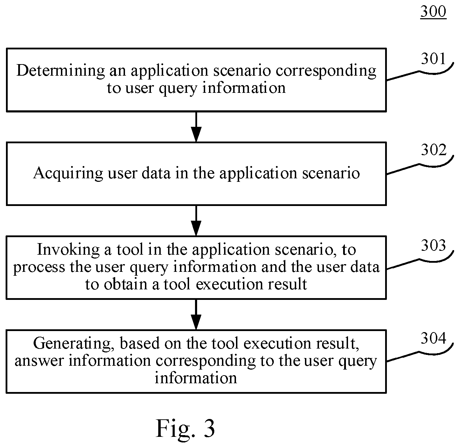

FIG. 3 illustrates a flow 300 of an embodiment of a method for dialogue according to the present disclosure. The method for dialogue includes the following steps:
Step 301, determining an application scenario corresponding to user query information.

In the present embodiment, an executing body of the method for dialogue may receive the user query information sent by a user, and determine the application scenario corresponding to the user query information.

The executing body of the method for dialogue is usually a server. The server may be hardware or software. When the server is hardware, it may be implemented as a distributed server cluster composed of a plurality of servers, or as a single server. When the server is software, it may be implemented as a plurality of software or software modules (e.g., for providing distributed services), or as a single software or software module, which is not limited herein.

Typically, different application scenarios have different entry webpages, so the user may open the corresponding webpage according to his/her needs and input the user query information. Based on the webpage where the user query information is input, the application scenario corresponding to the user query information may be determined. Here, the application scenario may be a scenario in which the user is engaged in a dialogue. The application scenario may include, but is not limited to: a sales scenario, a question-and-answer scenario, or the like. In addition, in different application scenarios, the character of an intelligent agent engaging in a dialogue with the user is different. For example, in a sales scenario, the intelligent agent that engages in a dialogue with the user may be a sales character, proactively recommending goods and guiding the user to make a purchase. In a question-and-answer scenario, the intelligent agent that engages in a dialogue with the user may be a question-and-answer assistant character, proactively answering the user's questions and improving user satisfaction.

Step 302, acquiring user data in the application scenario.

In the present embodiment, the executing body may acquire the user data in the application scenario.

User data in different application scenarios may be stored separately. Here, according to the application scenario, the corresponding user data may be acquired. Here, the user data may include, but is not limited to, a dialogue context, a dialogue state, a user profile, etc. The dialogue context may include user historical dialogue information and a user historical dialogue intelligent summary. The user historical dialogue information may record all dialogues between the user and the intelligent agent. The user historical dialogue intelligent summary may be an intelligent summary of the user historical dialogue information every few rounds, which can prevent the phenomenon of long-term forgetting. The dialogue state may record an execution path and state of a historical intelligent agent and a current intelligent agent, which can serve as a guide for next step planning of the intelligent agent. The user profile may record the user's personal characteristics and a historical user path summary, which is crucial for personalized recommendation and long-term memory understanding.

Step 303, invoking a tool in the application scenario, to process the user query information and the user data to obtain a tool execution result.

In the present embodiment, the executing body may invoke the tool in the application scenario, to process the user query information and the user data to obtain the tool execution result.

Different application scenarios may provide different tools for processing the user query information and the user data. For example, in a sales scenario, tools may include but are not limited to goods recommendation, goods comparison, or user behaviour analysis. In a question-and-answer scenario, tools may include but are not limited to question answering, or user satisfaction evaluation.

In some embodiments, according to different application scenarios, pluggable tools and corresponding description files may be provided. Setup of such pluggable tools is highly flexible and scalable, and can be adapted to a variety of different application scenarios. The description files of the tools may usually contain names, functions, basic parameters, optional parameters, etc., of the tools. In addition, some usage examples may also be contained. Such description files can contribute to better planning, tool selection, tool parameter generation, and tool execution, etc.

Step 304, generating, based on the tool execution result, answer information corresponding to the user query information.

In the present embodiment, the executing body may generate the answer information corresponding to the user query information, based on the tool execution result. Targeted answers to user queries in application scenarios may be realized through the tools in the application scenarios.

In some embodiments, the executing body may process the tool execution result based on a prompt in the application scenario, to generate the answer information. Different application scenarios may have different prompts. According to the different application scenarios, intelligent agent character positioning and language styles may be aligned and adjusted through the prompts to meet different intelligent agent characters and user needs. For example, in a sales scenario, the intelligent agent may play the character of a salesman, proactively recommending goods and guiding the user to make a purchase. In a question-and-answer scenario, the intelligent agent may need to play the character of a question-and-answer assistant, proactively answering the user's questions and improving user satisfaction.

In some embodiments, the executing body may generate next question guidance information, based on the user query information, the answer information and the user data, so as to proactively stimulate the user to initiate a next round of dialogue.

In some embodiments, the executing body may update the user data, based on the user query information and the answer information. After each round of dialogue, the user data may be updated based on the user's session information of the current round, to assist the intelligent agent in making decisions for the next round. Here, the user data may include, but is not limited to, a dialogue context, a dialogue state, a user profile, etc.

An embodiment of the present disclosure provides a method for dialogue, by using a tool in an application scenario, the method is able to deeply understand and accurately satisfy user needs, achieving a targeted answer to the user's query in the application scenario, satisfying the user's personalized and diversified needs, and effectively stimulating the user's interest in purchasing.

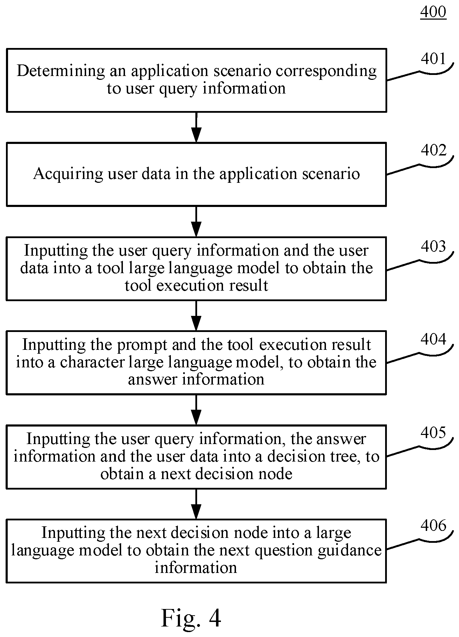

FIG. 4 illustrates a flow 400 of another embodiment of the method for dialogue according to the present disclosure. The method for dialogue includes the following steps:
Step 401, determining an application scenario corresponding to user query information.

In the present embodiment, an executing body of the method for dialogue may receive the user query information sent by a user, and determine the application scenario corresponding to the user query information.

The executing body of the method for dialogue is usually a server. The server may be hardware or software. When the server is hardware, it may be implemented as a distributed server cluster composed of a plurality of servers, or as a single server. When the server is software, it may be implemented as a plurality of software or software modules (e.g., for providing distributed services), or as a single software or software module, which is not limited herein.

Typically, different application scenarios have different entry webpages, so the user may open the corresponding webpage according to his/her needs and input the user query information. Based on the webpage where the user query information is input, the application scenario corresponding to the user query information may be determined. Here, the application scenario may be a scenario in which the user is engaged in a dialogue. The application scenario may include, but is not limited to: a sales scenario, a question-and-answer scenario, or the like. In addition, in different application scenarios, the character of an intelligent agent engaging in a dialogue with the user is different. For example, in a sales scenario, the intelligent agent that engages in a dialogue with the user may be a sales character, proactively recommending goods and guiding the user to make a purchase. In a question-and-answer scenario, the intelligent agent that engages in a dialogue with the user may be a question-and-answer assistant character, proactively answering the user's questions and improving user satisfaction.

Step 402, acquiring user data in the application scenario.

In the present embodiment, the executing body may acquire the user data in the application scenario.

User data in different application scenarios may be stored separately. Here, according to the application scenario, the corresponding user data may be acquired. Here, the user data may include, but is not limited to, a dialogue context, a dialogue state, a user profile, etc. The dialogue context may include user historical dialogue information and a user historical dialogue intelligent summary. The user historical dialogue information may record all dialogues between the user and the intelligent agent. The user historical dialogue intelligent summary may be an intelligent summary of the user historical dialogue information every few rounds, which can prevent the phenomenon of long-term forgetting. The dialogue state may record an execution path and state of a historical intelligent agent and a current intelligent agent, which can serve as a guide for next step planning of the intelligent agent. The user profile may record the user's personal characteristics and a historical user path summary, which is crucial for personalized recommendation and long-term memory understanding.

Step 403, inputting the user query information and the user data into a tool large language model to obtain the tool execution result.

In the present embodiment, the executing body may input the user query information and the user data into the tool large language model to obtain the tool execution result. The user query information and the user data are input into the tool large language model, which may output a tool to be used for solving the user's question in this application scenario. Using a script execution tool, the tool execution result may be obtained.

The tool large language model may predict the tool to be used for solving the user's question in the application scenario. A task goal of the tool large language model may be to output all invoking tools and their tool inputs at once. The tool large language model may be obtained by performing supervised fine-tuning on a large language model using sample user historical dialogue information labelled with tool tags, a training process thereof may be referred to the embodiment as shown in FIG. 1, detailed description thereof will be omitted.

Different application scenarios may provide different tools for processing the user query information and the user data. For example, in a sales scenario, tools may include but are not limited to goods recommendation, goods comparison, or user behaviour analysis. In a question-and-answer scenario, tools may include but are not limited to question answering, or user satisfaction evaluation.

In some embodiments, according to different application scenarios, pluggable tools and corresponding description files may be provided. Setup of such pluggable tools is highly flexible and scalable, and can be adapted to a variety of different application scenarios. The description files of the tools may usually contain names, functions, basic parameters, optional parameters, etc., of the tools. In addition, some usage examples may also be contained. Such description files can contribute to better planning, tool selection, tool parameter generation, and tool execution, etc.

Step 404, inputting the prompt and the tool execution result into a character large language model, to obtain the answer information.

In the present embodiment, the executing body may input the prompt and the tool execution result into the character large language model, to obtain the answer information.

The character large language model may be a trained large language model that is able to align character definitions to answer the user's questions and refuse to answer irrelevant questions through the prompt. Different application scenarios may have different prompts. According to the different application scenarios, intelligent agent character positioning and language styles may be aligned and adjusted through the prompts to meet different intelligent agent characters and user needs. For example, in a sales scenario, the intelligent agent may play the character of a salesman, proactively recommending goods and guiding the user to make a purchase. In a question-and-answer scenario, the intelligent agent may need to play the character of a question-and-answer assistant, proactively answering the user's questions and improving user satisfaction.

Step 405, inputting the user query information, the answer information and the user data into a decision tree, to obtain a next decision node.

In the present embodiment, the executing body may input the user query information, the answer information and the user data into the decision tree, to obtain the next decision node. Here, the decision tree may be built based on the user's historical dialogues, and through a logic of the decision tree, the next decision node of the user may be predicted.

Step 406, inputting the next decision node into a large language model to obtain the next question guidance information.

In the present embodiment, the executing body may input the next decision node into the large language model to obtain the next question guidance information. For example, the large language model may propose guidance questions through few-shot. Finally, proactive stimulus questions are selected through a PK mechanism.

An embodiment of the present disclosure provides a method for dialogue, through character alignment, tool reasoning, and proactive stimulation, the method realizes a deep understanding and accurate satisfaction of user needs, effectively stimulating the user's interest in purchasing. Through character alignment, it can quickly migrate to multiple intelligent agents; through quick-plugging tools, it can be adapted to multiple application scenarios; and through multiple intelligent agents working in concert, it can efficiently respond to complex and diversified selection and purchase needs of the user.

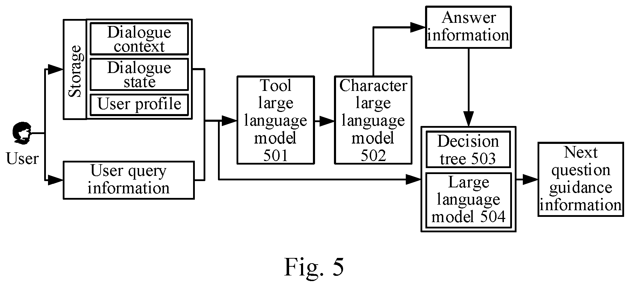

FIG. 5 illustrates a model structure diagram of the method for dialogue. The model structure of the method for dialogue may include a tool large language model 501, a character large language model 502, a decision tree 503, and a large language model 504.

First, user query information and user data in an application scenario are input into the tool large language model 501 to obtain a tool execution result. Here, the user data may include a dialogue context, a dialogue state, a user profile, etc.

Then, a prompt corresponding to the application scenario and the tool execution result are input into the character large language model 502 to obtain answer information.

In addition, the user query information, the answer information and the user data are input into the decision tree 503 to obtain a next decision node. The next decision node is input into the large language model 504 to obtain next question guidance information.

Here, a generic intelligent agent architecture is designed to be able to quickly migrate to multiple intelligent agents through character alignment; to be able to adapted to multiple application scenarios through quick-plugging tools; and to be able to efficiently respond to complex and diversified selection and purchase needs of the user through multiple intelligent agents working in concert. The advantages are mainly reflected in the following aspects:
1. predicting a path of user selection and purchase, improving user experience, promoting conversion: through the mechanism of multiple intelligent agents working in concert, the architecture may effectively enhance deep understanding and accurate satisfaction of user needs, stimulate the user's interest in purchasing, promote to reach a next step path of selection and purchase, and improve a sales efficiency and a conversion rate.
2. enhancing flexibility and scalability of the solution: designing a generic set of intelligent agent architecture, that may be flexibly adapted to different application scenarios through pluggable tool setup and character prompts.
3. reducing operating costs: through intelligent agents working in concert, the architecture can automatically process a large number of user requests, thus greatly reducing the workload of human customer service, saving operating costs.

The architecture has clear advantages in terms of user experience, sales efficiency, product flexibility and scalability, and operating costs.

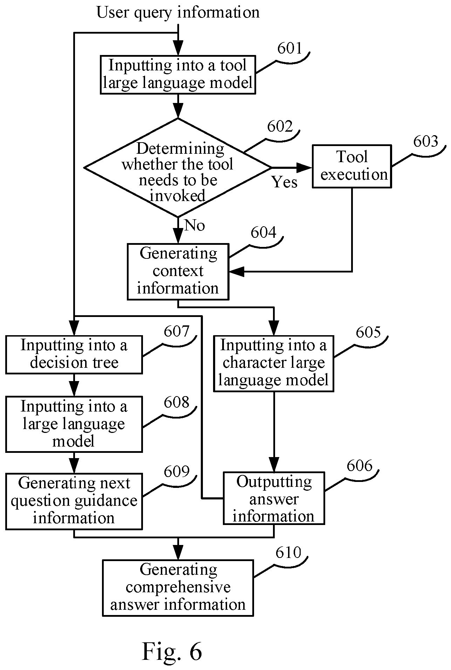

FIG. 6 illustrates a flowchart of single-intelligent agent interaction. The flow of single-intelligent agent interaction includes the following steps:
Step 601, inputting user query information and user data into a tool large language model, for predicting a tool to be used for solving a user's question.
Step 602, determining whether the tool needs to be invoked. If yes, performing step 603; if no, performing step 604.
Step 603, tool execution.
Step 604, generating context information.
Step 605, inputting a prompt and the context information into a character large language model.
Step 606, outputting answer information.
Step 607, inputting the user query information, the answer information, and the user data into a decision tree, to obtain a next decision node.
Step 608, inputting the next decision node into a large language model.
Step 609, generating next question guidance information.
Step 610, generating, based on the answer information and the next question guidance information, comprehensive answer information.

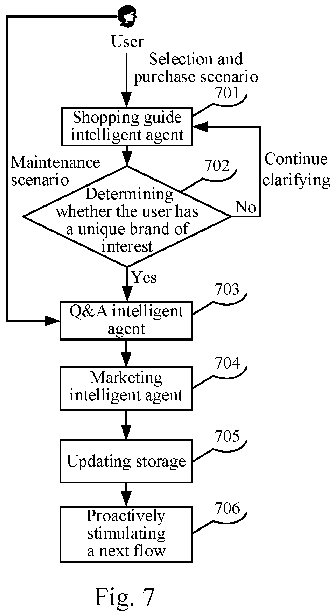

FIG. 7 illustrates a flowchart of multi-intelligent agent interaction. Taking car sales as an example, three intelligent agents are designed and applied: a shopping guide intelligent agent, a Q&A intelligent agent and a marketing intelligent agent, which cover different stages of user selection and purchase, and compose an entire sales and customer service system. Here, the shopping guide intelligent agent may be used as a car shopping guide character. The Q&A intelligent agent may be used as a car Q&A assistant character. The marketing intelligent agent may be used as a car sales character.

As shown in FIG. 7, the flow of multi-intelligent agent interaction includes the following steps:
Step 701, for a selection and purchase scenario, recommending and clarifying to the only model of interest for the user using the shopping guide intelligent agent.
Step 702, the shopping guide intelligent agent determining whether the user has a unique brand of interest. If yes, performing step 703; if no, returning to continue clarifying.
Step 703, for a maintenance scenario, or if the user has the unique brand of interest, answering a series of questions about the car for the user using the Q&A intelligent agent.
Step 704, guiding the user to purchase the car and leave money using the marketing intelligent agent.
Step 705, updating a current round of user dialogue into storage.
Step 706, proactively stimulating a next flow.

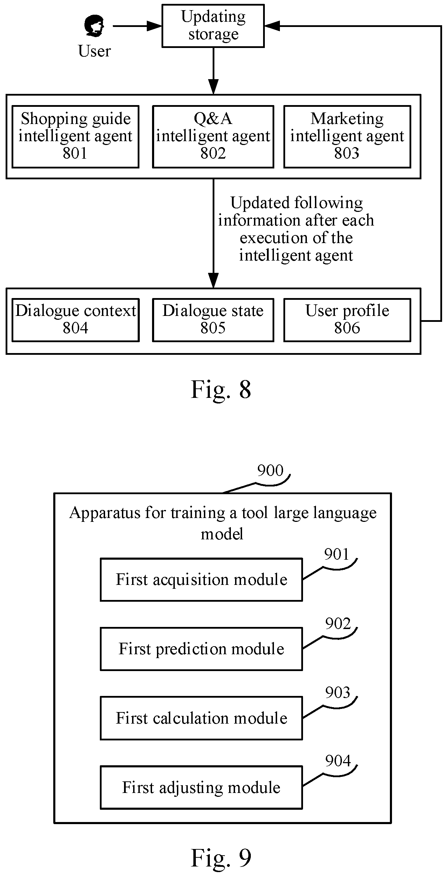

FIG. 8 illustrates a diagram of a multi-intelligent agent memory update mechanism. For a shopping guide intelligent agent 801, a Q&A intelligent agent 802, and a marketing intelligent agent 803, user data is updated after each execution of the intelligent agent. The user data may include a dialogue context 804, a dialogue state 805, and a user profile 806.

Through the single-intelligent agent interaction flow in FIG. 6 and the multi-intelligent agent interaction flow in FIG. 7, multiple intelligent agents working in concert is realized to provide the user with personalised car purchase consulting services, and guide the user to leave money and visit the shop, stimulating the user's interest in purchasing a car.

In addition, the collaborative multi-intelligent agents-based sales and customer service system has a wide range of application fields, which may be applied to various fields such as online retail, e-commerce, customer service, online marketing, education consulting or financial services, in addition to car sales.

With further reference to FIG. 9, as an implementation of the method shown in the above figures, the present disclosure provides an embodiment of an apparatus for training a tool large language model, and the apparatus embodiment corresponds to the method embodiment shown in FIG. 1, the apparatus may be applied to various electronic devices.

As shown in FIG. 9, an apparatus 900 for training a tool large language model in the present embodiment may include: a first acquisition module 901, a first prediction module 902, a first calculation module 903 and a first adjusting module 904. Here, the first acquisition module 901 is configured to acquire a training sample corresponding to at least one application scenario, where the training sample includes first sample user historical dialogue information and a first sample tool tag; the first prediction module 902 is configured to input the first sample user historical dialogue information into a large language model to obtain first prediction tool information; the first calculation module 903 is configured to calculate a first loss, based on the first prediction tool information and the first sample tool tag; and the first adjusting module 904 is configured to adjust parameters of the large language model based on the first loss, to obtain the tool large language model.

In the present embodiment, in the apparatus 900 for training a tool large language model: the specific processing and technical effects of the first acquisition module 901, the first prediction module 902, the first calculation module 903 and the first adjusting module 904 may be referred to the relevant descriptions of steps 101-104 in the corresponding embodiment of FIG. 1, respectively, and detailed description thereof will be omitted.

In some alternative implementations of the present embodiment, the apparatus 900 for training a tool large language model further includes: a second acquisition module, configured to acquire a test sample corresponding to at least one application scenario, where the test sample includes second sample user historical dialogue information and a second sample tool tag; a second prediction module, configured to input the second sample user historical dialogue information into the tool large language model to obtain second prediction tool information; a second calculation module, configured to calculate an accuracy of the tool large language model, based on the second sample tool tag and the second prediction tool information; and a determination module, configured to determine, in response to the accuracy of the tool large language model not being less than a preset accuracy threshold, that the tool large language model passes a test.

In some alternative implementations of the present embodiment, the apparatus 900 for training a tool large language model further includes: a third calculation module, configured to calculate a second loss based on the second sample tool tag and the second prediction tool information, in response to the accuracy of the tool large language model being less than the preset accuracy threshold; and a second adjusting module, configured to adjust parameters of the tool large language model based on the second loss.

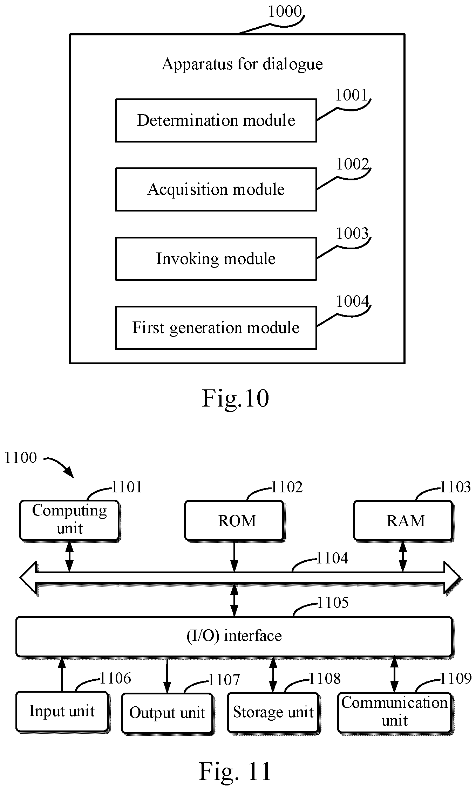

With further reference to FIG. 10, as an implementation of the method shown in the above figures, the present disclosure provides an embodiment of an apparatus for dialogue, and the apparatus embodiment corresponds to the method embodiment shown in FIG. 3, the apparatus may be applied to various electronic devices.

As shown in FIG. 10, an apparatus 1000 for dialogue in the present embodiment may include: a determination module 1001, an acquisition module 1002, an invoking module 1003 and a first generation module 1004. Here, the determination module 1001 is configured to determine an application scenario corresponding to user query information; the acquisition module 1002 is configured to acquire user data in the application scenario; the invoking module 1003 is configured to invoke a tool in the application scenario, to process the user query information and the user data to obtain a tool execution result; and the first generation module 1004 is configured to generate, based on the tool execution result, answer information corresponding to the user query information.

In the present embodiment, in the apparatus 1000 for dialogue: the specific processing and technical effects of the determination module 1001, the acquisition module 1002, the invoking module 1003 and the first generation module 1004 may be referred to the relevant descriptions of steps 301-304 in the corresponding embodiment of FIG. 3, respectively, and detailed description thereof will be omitted.

In some alternative implementations of the present embodiment, the invoking module 1003 is further configured to: input the user query information and the user data into a tool large language model to obtain the tool execution result, where the tool large language model is obtained by performing supervised fine-tuning on a large language model using sample user historical dialogue information labelled with tool tags.

In some alternative implementations of the present embodiment, the first generation module 1004 includes: a generation submodule, configured to process the tool execution result, based on a prompt of the application scenario, to generate the answer information.

In some alternative implementations of the present embodiment, the generation submodule is further configured to: input the prompt and the tool execution result into a character large language model, to obtain the answer information.

In some alternative implementations of the present embodiment, the apparatus 1000 for dialogue further includes: a second generation module, configured to generate next question guidance information, based on the user query information, the answer information and the user data.

In some alternative implementations of the present embodiment, the second generation module is further configured to: input the user query information, the answer information and the user data into a decision tree, to obtain a next decision node; and input the next decision node into a large language model to obtain the next question guidance information.

In some alternative implementations of the present embodiment, the apparatus 1000 for dialogue further includes: an updating module, configured to update the user data, based on the user query information and the answer information.

In the technical solution of the present disclosure, the acquisition, storage and application of personal information of a user involved are in conformity with relevant laws and regulations, and do not violate public order and good customs.

According to an embodiment of the present disclosure, the present disclosure further provides an electronic device, a readable storage medium, and a computer program product.

FIG. 11 shows a schematic block diagram of an example electronic device 1100 used to implement embodiments of the present disclosure. The electronic device is intended to represent various forms of digital computers, such as a laptop, a desktop computer, a workbench, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in FIG. 11, the device 1100 includes a computing unit 1101, which may execute various appropriate actions and processes in accordance with a computer program stored in a read-only memory (ROM) 1102 or a computer program loaded into a random-access memory (RAM) 1103 from a storage unit 1108. The RAM 1103 may further store various programs and data required by operations of the device 1100. The computing unit 1101, the ROM 1102, and the RAM 1103 are connected to each other through a bus 1104. An input/output (I/O) interface 1105 is also connected to the bus 1104.

A plurality of components in the device 1100 is connected to the I/O interface 1105, including: an input unit 1106, such as a keyboard and a mouse; an output unit 1107, such as various types of displays and speakers; the storage unit 1108, such as a magnetic disk and an optical disk; and a communication unit 1109, such as a network card, a modem, and a wireless communication transceiver. The communication unit 1109 allows the device 1100 to exchange information/data with other devices via a computer network such as the Internet and/or various telecommunication networks.

The computing unit 1101 may be various general-purpose and/or special-purpose processing components having a processing power and a computing power. Some examples of the computing unit 1101 include, but are not limited to, a central processing unit (CPU), a graphics processing unit (GPU), various special-purpose artificial intelligence (AI) computing chips, various computing units running a machine learning model algorithm, a digital signal processor (DSP), and any appropriate processor, controller, micro-controller, or the like. The computing unit 1101 executes various methods and processes described above, such as the method for dialogue. For example, in some embodiments, the method for dialogue may be implemented as a computer software program that is tangibly included in a machine-readable medium, such as the storage unit 1108. In some embodiments, some or all of the computer programs may be loaded and/or installed onto the device 1100 via the ROM 1102 and/or the communication unit 1109. When the computer program is loaded into the RAM 1103 and executed by the computing unit 1101, one or more steps of the method for dialogue described above may be executed. Alternatively, in other embodiments, the computing unit 1101 may be configured to execute the method for dialogue by any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, specific-purpose computer or other programmable data processing apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, a distributed system server, or a server combined with a blockchain.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above specific implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for dialogue, the method comprising:
determining (301) an application scenario corresponding to user query information;
acquiring (302) user data in the application scenario;
invoking (303) a tool in the application scenario, to process the user query information and the user data to obtain a tool execution result; and
generating (304), based on the tool execution result, answer information corresponding to the user query information.

2. The method according to claim 1, wherein the invoking (303) a tool in the application scenario, to process the user query information and the user data to obtain a tool execution result, comprises:
inputting (403) the user query information and the user data into a tool large language model to obtain the tool execution result, wherein the tool large language model is obtained by performing supervised fine-tuning on a large language model using sample user historical dialogue information labelled with tool tags.

3. The method according to claim 1 or 2, wherein the generating (304), based on the tool execution result, answer information corresponding to the user query information, comprises:
processing the tool execution result, based on a prompt of the application scenario, to generate the answer information.

4. The method according to claim 3, wherein the processing the tool execution result, based on a prompt of the application scenario, to generate the answer information, comprises:
inputting (404) the prompt and the tool execution result into a character large language model, to obtain the answer information.

5. The method according to any one of claims 1-4, wherein the method further comprises:
generating next question guidance information, based on the user query information, the answer information and the user data.

6. The method according to claim 5, wherein the generating next question guidance information, based on the user query information, the answer information and the user data, comprises:
inputting (405) the user query information, the answer information and the user data into a decision tree, to obtain a next decision node; and
inputting (406) the next decision node into a large language model to obtain the next question guidance information.

7. The method according to any one of claims 1-6, wherein the method further comprises:
updating the user data, based on the user query information and the answer information.

8. A method for training a tool large language model, the method comprising:
acquiring (101) a training sample corresponding to at least one application scenario, wherein the training sample comprises first sample user historical dialogue information and a first sample tool tag;
inputting (102) the first sample user historical dialogue information into a large language model to obtain first prediction tool information;
calculating (103) a first loss, based on the first prediction tool information and the first sample tool tag; and
adjusting (104) parameters of the large language model based on the first loss, to obtain the tool large language model.

9. The method according to claim 8, wherein the method further comprises:
acquiring a test sample corresponding to the at least one application scenario, wherein the test sample comprises second sample user historical dialogue information and a second sample tool tag;
inputting the second sample user historical dialogue information into the tool large language model to obtain second prediction tool information;
calculating an accuracy of the tool large language model, based on the second sample tool tag and the second prediction tool information; and
determining, in response to the accuracy of the tool large language model not being less than a preset accuracy threshold, that the tool large language model passes a test.

10. The method according to claim 9, wherein the method further comprises:
calculating a second loss based on the second sample tool tag and the second prediction tool information, in response to the accuracy of the tool large language model being less than the preset accuracy threshold; and
adjusting parameters of the tool large language model based on the second loss.

11. An apparatus for dialogue, the apparatus comprising:
a determination module (1001), configured to determine an application scenario corresponding to user query information;
an acquisition module (1002), configured to acquire user data in the application scenario;
an invoking module (1003), configured to invoke a tool in the application scenario, to process the user query information and the user data to obtain a tool execution result; and
a first generation module (1004), configured to generate, based on the tool execution result, answer information corresponding to the user query information.

12. An apparatus for training a tool large language model, the apparatus comprising:
a first acquisition module (901), configured to acquire a training sample corresponding to at least one application scenario, wherein the training sample comprises first sample user historical dialogue information and a first sample tool tag;
a first prediction module (902), configured to input the first sample user historical dialogue information into a large language model to obtain first prediction tool information;
a first calculation module (903), configured to calculate a first loss, based on the first prediction tool information and the first sample tool tag; and
a first adjusting module (904), configured to adjust parameters of the large language model based on the first loss, to obtain the tool large language model.

13. An electronic device, comprising:
at least one processor; and
a memory communicatively connected to the at least one processor; wherein,
the memory stores instructions executable by the at least one processor, and the instructions, when executed by the at least one processor, cause the at least one processor to perform the method according to any one of claims 1-7 or 8-10.

14. A non-transitory computer readable storage medium storing computer instructions, wherein the computer instructions are used to cause a computer to perform the method according to any one of claims 1-7 or 8-10.

15. A computer program product, comprising a computer program, the computer program, when executed by a processor, implementing the method according to any one of claims 1-7 or 8-10.
